# EUROPEAN PATENT SPECIFICATION

(11) **EP 1 607 455 B1**
(45) Date of publication and mention of the grant of the patent: **11.06.2008**
(21) Application number: 05253658.8
(22) Date of filing: 14.06.2005
(51) Int. Cl.: C09D 11/00

(54) **Water base ink for ink-jet recording**
Tinte für das Tintenstrahldruckverfahren auf Wasserbasis
Encre aqueuse à jet d'encre

(30) Priority: 14.06.2004 JP 2004176221
(43) Date of publication of application: 21.12.2005
(73) Proprietor: Brother Kogyo Kabushiki Kaisha, Nagoya-shi, Aichi-ken 467-8561 (JP)
(72) Inventor: Aoi, Noriatsu, Brother Kogyo Kabushiki Kaisha, Nagoya-shi Aichi-ken 467-8562 (JP); Kato, Ryuji, Brother Kogyo Kabushiki Kaisha, Nagoya-shi Aichi-ken 467-8562 (JP); Ohira, Hideo, Brother Kogyo Kabushiki Kaisha, Nagoya-shi Aichi-ken 467-8562 (JP); Fujioka, Masaya, Brother Kogyo Kabushiki Kaisha, Nagoya-shi Aichi-ken 467-8562 (JP); Higashiyama, Shunichi, Brother Kogyo K.K., Nagoya-shi Aichi-ken 467-8562 (JP)
(74) Representative: Benson, John Everett

(56) References cited:
- EP-A- 0 859 036
- EP-A- 0 943 666
- EP-A- 1 035 178
- EP-A- 1 184 429
- EP-A- 1 287 993
- US-A1- 2002 059 883

## Description

### Field of the Invention:

The present invention relates to a method of preparing a water base ink for ink-jet recording.

### Description of the Related Art:

The ink-jet recording system resides in, for example, the thermal system in which the ink is discharged from minute nozzles by the aid of bubbles generated by the sudden heating, or the piezoelectric system in which the ink is discharged from minute nozzles by using the piezoelectric element which is deformed in accordance with the voltage application. In this printing technique, the inks of several colors as basic colors are converted into minute liquid droplets of several picoliters to several tens picoliters which are selectively landed on the paper surface so that an image is formed thereby.

In the ink-jet recording system, the minute liquid droplets of several picoliters are landed onto the paper surface highly accurately by the discharge control of the minute liquid droplets. Therefore, it is possible to form the image which has no granular texture and which possesses the color reproduction approximate to the full color, and it is possible to obtain the high printing quality of letters and the high printing quality of images.

However, in order to make it possible to discharge the minute liquid droplets as described above, it is necessary to adopt a technique for highly accurately control of the discharge and landing of the droplets from the sufficiently thin discharge nozzles. Further, it is necessary to remove dust and impurities contained in the ink in order to effect the highly accurate discharge and landing control. For this reason, it is required for the water base ink for ink-jet recording to perform the microfiltration after preparing the ink. Further, it is required that all parts, which make contact with the ink, are formed of materials which have no compatibility with respect to the ink and which are sufficiently washed.

On the other hand, a metal member, which is composed of an alloy of iron and nickel, is sometimes used for the discharge section based on the ink-jet recording system. When the water base ink is discharged with such a discharge section, metal ions of iron and nickel are eluted into the ink. Insoluble inorganic salts are formed due to the elution of the metal ions and/or the corrosion (deterioration) of the metal member caused by the long term contact between the discharge head and the water base ink. As a result, the filter and the nozzle are clogged. Therefore, a problem arises such that the highly accurate discharge and landing control cannot be performed.

The substance, which tends to corrode the metal member including iron and nickel, is exemplified by dissolved oxygen contained in the ink. The reaction velocity of the metal oxidation corrosion is ruled by the dissolved oxygen as described later on. Chlorine ion also tends to corrode the metal member including iron and nickel. The chlorine ion is specifically adsorbed to the metal surface, and it corrodes the rustproofing coating and the passive material on the metal surface in cooperation with oxygen. When the coloring agent is a dye, the satisfactory discharge performance is obtained in some cases even when the chlorine ion is contained in the ink in an amount of several hundreds ppm (U.S. Patent No. 4,373,954 A corresponding to Japanese Patent Publication No. 60-34993). However, when the coloring agent is a pigment, the chlorine ion tends to cause the discharge failure.

On the other hand, in recent years, the printer, which carries a pigment ink based on the use of carbon black, is adopted increasingly in place of the dye ink as the coloring agent. When the pigment ink is used, it is possible to increase the density of the image area as compared with the case in which the dye ink is used. Accordingly, it is possible to enhance the contrast between the image area and the non-image area. However, when the pigment ink, which is based on the use of carbon black, is used for the printer which uses the metal member for the discharge section, then the metal ions are eluted, and the corrosion of the discharge section is advanced unlike the case in which the dye ink is used, even when the chlorine ion concentration is not more than 100 ppm in the ink. As a countermeasure therefor, it is conceived that a rustproofing agent such as 1,2,3-benzotriazole is added to the ink. However, in the case of the pigment ink, the corrosion of the discharge section cannot be suppressed, even when the rustproofing agent is added.
EP 1287993 relates to a recording unit, image recording apparatus and image recording method. US 2002/0059883 relates to an aqueous ink that exhibits characteristics based on anionic self-dispersing carbon black, and has superior ejection stability even after suspension of printing. EP 1184429 relates to an ink-jet recording method having steps of giving energy to the ink, discharging the ink from a recording head and depositing the ink on a recording medium. EP 1035178 relates to an aqueous pigment dispersion and an ink composition which can achieve high print density. EP 0943666 relates to a black ink capable of mitigating dependency on image quality of recording medium and giving a high quality image stably. EP 0859036 relates to an ink-jet composition comprising a liquid vehicle, a pigment and an aqueous anionic black dye.

### SUMMARY OF THE INVENTION

The present invention has been made in order to solve the problems as described above, an object of which is to provide a water base ink for ink-jet recording containing carbon black as a colouring agent, the ink being capable of avoiding the corrosion of a discharge section even when the ink is used for a printer provided with the discharge section formed of a metal member, as well as an ink set for ink-jet recording comprising the same, and an ink-jet recording apparatus comprising the ink set.

The inventors have found out that the foregoing object can be achieved by making the content of chlorine ion to be not more than a specified value even when dissolved oxygen is present in an ink as a water base ink for ink-jet recording based on the use of carbon black.

According to the present invention, there is provided a method of preparing a water base ink for ink-jet recording comprising:
water; and
carbon black as a coloring agent, wherein
a content of chlorine ion in the ink is not more than 8 ppm, wherein said method comprises removing chlorine or chlorine ions from carbon black by ultrafiltration, and mixing the carbon black with water.

The water base ink for ink-jet recording prepared by the present invention makes it possible to avoid the elution of metal ions such as those of iron and nickel into the ink even when the ink is used for a printer which uses a metal member for a discharge section and an ink supply passage to the discharge section. Even when oxygen is contained, for example, to such an extent that the dissolved oxygen is about 9 ppm or less in the water base ink containing carbon black, then it is possible to avoid the elution of metal ions such as those of iron and nickel into the ink, and it is possible to avoid the corrosion of the metal member of the printer, because the content of chlorine ion is suppressed to be not more than 8 ppm. Therefore, it is possible to avoid the deterioration of the metal member itself due to the corrosion, and it is possible to avoid the occurrence of any clog-up at the filter and the nozzle due to the formation of insoluble inorganic salt in the ink caused thereby. Thus, it is possible to perform the discharge and landing control sufficiently highly accurately. The dissolved oxygen can be lowered to about 0.5 ppm by using the ultrasonic treatment and the hollow fiber membrane. However, the treatment, which requires the labor and the cost as described above, is not performed in the present invention. It has been found out that the elution of metal ions such as those of iron and nickel into the ink can be effectively avoided by decreasing the content of chlorine ion.

### BRIEF DESCRIPTION OF DRAWINGS

FIG. 1 is a perspective view showing a color ink-jet printer having an ink cartridge which contains ink prepared in examples of the invention;
FIG. 2 is a perspective view of a head unit, with its nozzles facing upward; and
FIG. 3 is a schematic diagram showing the ink jet print head and a controller.

### DESCRIPTION OF THE PREFERRED EMBODIMENTS

Embodiments of the present invention will be explained below.

The water base ink for ink-jet recording prepared by the method of the present invention is characterized in that carbon black is contained as a coloring agent, and the low concentration of not more than 8 ppm, especially 5 ppm, and more especially 2 ppm is achieved for the content of chlorine ion.

The reason of the feature is that the corrosion speed of the metal member such as iron and nickel is accelerated if the chlorine ion is contained in the pigment ink. That is, it is well-known that the metal corrosion occurs when oxygen and water are present simultaneously in the environment. The electrochemical mechanism of the corrosion is advanced in accordance with the anodic reaction and the cathodic reaction shown below.

M → M²⁺ + 2e

1/2O₂ + 2H⁺ + 2e → H₂O (M represents metal)

When the metal member such as iron, nickel, or an alloy containing both of them is used for the discharge section of the printer, and the metal member is immersed in the water base ink, then sufficient water is supplied to the metal such as iron and nickel for constructing the metal member. Therefore, the reaction velocity of the oxidation corrosion thereof (anodic reaction) is ruled by the amount of oxygen, i.e., the amount of dissolved oxygen in the ink. It is known that in the case of the ink containing carbon black, the dissolved oxygen in the ink is present in an amount of about 9 ppm or less when the ink is open to the atmospheric air.

The amount of dissolved oxygen in the dye ink does not greatly differ from the amount calculated in accordance with the Henry's law. However, it is considered that the amount of dissolved oxygen in the pigment ink is several times to several tens times the amount of dissolved oxygen in the dye ink, because the carbon black as the pigment adsorbs oxygen. Therefore, it is considered that the metal oxidation corrosion is advanced quickly in the pigment ink as compared with the dye ink, Fe(OH)₃ and Ni(OH)₂, which are scarcely soluble in water, are produced, and it is impossible to effect the highly accurate discharge and landing control.

The chlorine ion accelerates the reaction of the metal oxidation corrosion. Accordingly, in the method of the present invention, the chlorine ion concentration in the ink is lowered to be as low as possible. For this purpose, high purity materials are selected as materials to be used for the ink, and/or the purification is performed sufficiently so that the content of chlorine ion in the ink is not more than 8 ppm, especially not more than 2 ppm. By doing so, even when oxygen is dissolved in an amount of about 9 ppm in the ink, it is possible to suppress the reaction of the metal oxidation corrosion.

The chlorine ion is contained as an impurity of the material to be used for the ink. For example, the following situations are assumed. (1) Sodium perchlorate, which is used to perform the surface treatment for the pigment, is not removed sufficiently after the treatment. (2) When a surfactant, in which higher alcohol is sulfatized with chlorosulfonic acid, is used, the chlorine ion is contained as an impurity in the surfactant. (3) When glycerol is obtained by salting out oils and fats, contained sodium chloride or the like is not purified sufficiently. Therefore, in the method of the present invention, it is desired that the components included in the ink such as the pigment, the surface-treating agent for the pigment, the water-soluble solvent and the surfactant are subjected to ultrafiltration or the like to lower the chlorine ion content.

In view of the prevention of corrosion at the discharge section of the printer, it is preferable that the content of chlorine ion in the ink is as low as possible. However, if high purity materials are used and/or the purification is repeatedly performed, then the production cost of the ink is increased. Therefore, it is preferable that the content of chlorine ion in the ink is actually 0.1 to 8 ppm, especially 0.1 to 2 ppm. The content can be lowered to be less than 0.1 ppm. However, the purification cost is increased. In view of the effect of the corrosion prevention, it is sufficient that the content of chlorine ion in the ink is lowered to 0.1 ppm.

In the present invention, the carbon black includes, for example, furnace black, lamp black, acetylene black, and channel black.

The technique for dispersing the carbon black in the ink is not especially limited. The technique may include, for example, the self-dispersion by the aid of the surface functional group, the dispersion with the surfactant, and the resin dispersion.

The carbon black is the most general black pigment. Specifically, those usable may include, for example, No. 25, No. 33, No. 40, No. 47, No. 52, No. 900, No. 2300, MCF-88, MA 600, MA 7, MA 8, and MA 100 (produced by Mitsubishi Chemical Corporation); Color Black FW1, Color Black FW2, Color Black FW2V, Color Black FW18, Color Black FW200, Color Black S150, Color Black S160, Color Black S170, Printex 35, Printex 150T, Printex U, Printex V, Printex 140U, Printex 140V, Special Black 6, Special Black 5, Special Black 4A, and Special Black 4 (produced by Degussa); Ravon 7000, Ravon 5750, Ravon 5250, Ravon 5000, Ravon 3500, Ravon 2000, Ravon 1500, Ravon 1250, Ravon 1200, Ravon 1190 ULTRA-II, Ravon 1170, and Ravon 1255 (produced by Columbia); and Black Pearls L, Regal 400R, Regal 330R, Regal 660R, Mogul L, Monarch 700, Monarch 800, Monarch 880, Monarch 900, Monarch 1000, Monarch 1100, Monarch 1300, Monarch 1400, and Valcan (produced by Cabot).

The following method is available to use the carbon black as described above as the coloring agent in order to prepare the water base ink for ink-jet recording. That is, the carbon black is subjected to a dispersing treatment in accordance with an ordinary method together with an appropriate dispersing agent, a water-soluble organic solvent, water, and optionally other additives.

In this procedure, those usable as the dispersing agent include, for example, high molecular weight or polymer dispersing agents and surfactants. The high molecular weight dispersing agent may include, for example, proteins such as gelatin and albumin; natural rubbers such as gum arabic and gum traganth; glucosides such as saponin; cellulose derivatives such as methyl cellulose, carboxy cellulose, and hydroxymethyl cellulose; natural high molecular weight compounds such as lignin sulfonic acid salt and shellac; anionic high molecular weight compounds such as polyacrylic acid salt, salt of styrene-acrylic acid copolymer, salt of vinylnaphthalene-acrylic acid copolymer, salt of styrenemaleic acid copolymer, salt of vinylnaphthalene-maleic acid copolymer, sodium salt of β-naphthalenesulfonic acid formalin condensate, and phosphoric acid salt; and nonionic high molecular weight compounds such as polyvinyl alcohol, polyvinyl pyrrolidone, and polyethylene glycol. The surfactant may include, for example, anionic surfactants such as higher alcohol sulfate ester salt, liquid fatty oil sulfate ester salt, and alkylarylsulfonic acid salt; and nonionic surfactants such as polyoxyethylene alkyl ether, polyoxyethylene alkyl ester, sorbitan alkyl ester, and polyoxyethylene sorbitan alkyl ester. The dispersing agent as described above may be appropriately selected and used singly. Alternatively, two or more of the dispersing agents as described above may be appropriately selected and used in combination. Internal gear, the amount of use of the dispersing agent is preferably 0.01 to 20 % by weight with respect to the total amount of the ink. However, the self-dispersing type pigment does not require any special dispersing treatment.

Any pigment other than the carbon black can be contained in the ink prepared by the method of the present invention, if necessary.

The pigment concentration in the ink is preferably 0.5 to 10 % by weight and more preferably 3 to 6 % by weight.

As the water to be used for the present invention, it is preferable to use those having high purities such as ion exchange water, distilled water, pure water, and ultrapure water.

Low volatile solvents are used as the water-soluble organic solvent in order to avoid the drying up of the ink and the deposition of solid matters from the ink due to the evaporation of water principally at the tip section of the ink-jet head. The low volatile solvent may include, for example, polyhydric alcohols such as ethylene glycol, diethylene glycol, triethylene glycol, polyethylene glycol, propylene glycol, dipropylene glycol, tripropylene glycol, polypropylene glycol, 1,3-butanediol, 1,5-pentanediol, 1,6-hexanediol, glycerol, 1,2,6-hexanetriol, 1,2,4-butanetriol, 1,2,3-butanetriol, and petriol; and nitrogen-containing heterocyclic compounds such as N-methyl-2-pyrrolidone, N-hydroxyethyl-2-pyrrolidone, 2-pyrrolidone, 1,3-dimethylimidazolidinone, and ε-caprolactam. The water-soluble organic solvent as described above may be used singly. Alternatively, two or more of the water-soluble organic solvents as described above may be used in a mixed manner as well.

The content of the low volatile solvent in the ink is preferably 5 to 40 % by weight, more preferably 7 to 40 % by weight, and much more preferably 10 to 35 % by weight. If the content is less than 5 % by weight, then the moistening function is insufficient, and problems arise, for example, such that the ink is dried up and the solid matter is deposited when water in the ink is evaporated. Even if the content is not more than 7 % by weight, the aggregation and the clog-up tend to occur, because the amount of nonvolatile solvent is small when water is evaporated. If the content exceeds 40 % by weight, then the viscosity of the ink is unnecessarily increased, and the discharge failure tends to be caused. Further, a problem tends to arise, for example, such that the ink is dried extremely slowly on the printing medium.

Polyhydric alcohol alkyl ether may be used as the water-soluble organic solvent other than the low volatile solvent described above, if necessary, as the permeability control agent to control the drying performance and the permeability of the ink into the printing medium. Specified examples thereof may include, for example, propylene glycol propyl ether, diethylene glycol monomethyl ether, diethylene glycol monobutyl ether, diethylene glycol monoisobutyl ether, diethylene glycol dimethyl ether, diethylene glycol diethyl ether, diethylene glycol dibutyl ether, dipropylene glycol monomethyl ether, dipropylene glycol monopropyl ether, dipropylene glycol monoisopropyl ether, dipropylene glycol monobutyl ether, dipropylene glycol dimethyl ether, dipropylene glycol dipropyl ether, dipropylene glycol dibutyl ether, triethylene glycol monomethyl ether, triethylene glycol monobutyl ether, tripropylene glycol monomethyl ether, tripropylene glycol monobutyl ether, triethylene glycol dimethyl ether, triethylene glycol dibutyl ether, tripropylene glycol dimethyl ether, and tripropylene glycol dibutyl ether.

The content of the permeability control agent in the ink is preferably 0.05 to 15 % by weight.

Monohydric alcohol such as ethanol and isopropyl alcohol can be also used other than above as the permeability control agent.

It is preferable that the surfactant is used for the present invention to adjust the surface tension in order to satisfy, for example, the discharge stability of the ink, the introducing performance into the head, and the printing quality. Specifically, there may be exemplified, for example, anionic surfactants such as EMAL, LATEMUL, LEVENOL, NEOPELEX, ELECTROSTRIPPER, NS SOAP, KS SOAP, OS SOAP, PELEX, and AMPHITOL series produced by Kao Corporation, and LIPOLAN, K LIPOLAN, LIPON, SUNNOL, LIPOTAC TE, ENAGICOL, LIPAL, LIONOL, and LOTAT series produced by Lion Corporation; and nonionic surfactants such as EMULGEN, RHEODOL, RHEODOL SUPER, EMASOL, EMASOL SUPER, EXCEL, EMANON, AMIET, and AMINON series produced by Kao Corporation, and DOBANOX, LEOCOL, LEOX, LAOL, LEOCON, LIONOL, CADENAX, LIONON, LEOFAT, ETHOFAT, ETHOMEEN, ETHODUOMEEN, ETHOMID, and AROMOX produced by Lion Corporation. However, there is no special limitation thereto. The surfactant as described above may be used singly. Alternatively, two or more of the surfactants as described above may be used in a mixed manner as well.

A rustproofing agent is preferably added in the present invention. Those preferably usable as the rustproofing agent include triazole-based rustproofing agents such as 1,2,3-benzotriazole and salt thereof, methyl-1H-benzotriazole, methyl-1H-benzotriazole amine salt, 2-(2'-hydroxy-5'-methylphenyl)benzotriazole, and 1-(N,N-bis(2-ethylhexyl)aminomethyl)benzotriazole. In particular, it is preferable to use 1,2,3-benzotriazole. A dense synthetic coating film is formed on the metal surface by 1,2,3-benzotriazole, which functions as a protective film against the corrosion so that the corrosion is suppressed. It is also allowable that 1,2,3-benzotriazole forms salt with alkali metal such as sodium.

The content of the rustproofing agent in the ink is preferably 0.01 to 5 % by weight, more preferably 0.05 to 3 % by weight, and much more preferably 0.1 to 1 % by weight. If the amount of the rustproofing agent is too small, it is impossible to obtain any sufficient rustproofing effect. On the contrary, if the amount of the rustproofing agent is too large, 1,2,3-benzotriazole is deposited in the ink to cause the nozzle clog-up, because 1,2,3-benzotriazole has low solubility in water.

If necessary, for example, known pH-adjusting agents, dye-dissolving agents, and antiseptic/fungicidal agents may be added in the present invention. Various additives to adjust thermal physical property values may be added to the ink depending on the system of the printer including, for example, the thermal system and the piezoelectric system.

### EXAMPLES

The present invention will be specifically explained below on the basis of Examples. Respective numbers of Comparative Examples correspond to numbers of Examples.

### Examples 1 to 3 and Comparative Examples 1 to 3

Respective inks of Examples and Comparative Examples were prepared in accordance with compositions shown in Table 1. Content of each material is represented in weight percent in Table 1. In this procedure, each of the inks of Examples was filtrated through a membrane filter having a pore size of 1 µm after the respective materials were sufficiently mixed and agitated. Three types of pigments were used, i.e., CAB-O-JET 300 (produced by Cabot, pigment dispersion liquid having a pigment content of 15 % by weight), Bonjet Black CW1 used in Example 2 (produced by Orient Chemical Industries, Ltd., pigment dispersion liquid having a pigment content of 20 % by weight), and Mikacion Brilliant Red 5BS (produced by Nippon Kayaku Co., Ltd., dye powder).

When the inks of Examples 1 to 3 were prepared, the following pretreatment was performed in order to lower the chlorine concentration. CAB-O-JET 300 used in Examples 1 and 3 and Bonjet Black CW1 used in Example 2 were subjected to the ultrafiltration at 7,000 rpm for 2 hours by using Macrosep Centrifugal Device (10K) produced by PALL Life Science to obtain only pigments. The pigments, from which the chlorine ion had been removed as described above, were diluted with pure water to prepare pigment dispersion liquids containing the same amounts of solid matters as those of the original pigment dispersion liquids. Each of the solvents, which was contained in the inks of Examples 1 to 3, was treated as follows. A mixture liquid was prepared by mixing components other than the pigment of each of the inks. The mixture liquid was agitated for not less than 20 minutes. After that, the mixture liquid was allowed to pass through an OH type strongly basic ion exchange resin to remove the chlorine ion from the mixture liquid. pH of the mixture liquid was raised as a result of the use of the OH type strongly basic ion exchange resin. Therefore, the mixture liquid was neutralized with nitric acid to give the same state as that established before the treatment with the ion exchange resin. The pretreatment as described above was not performed for Comparative Examples.

### Measurement of chlorine ion concentration

The chlorine ion concentration and the corrosion potential were measured as follows for the respective obtained inks. Each of the inks was subjected to the ultrafiltration at 7,000 rpm for 2 hours by using Macrosep Centrifugal Device (10K) produced by PALL Life Sciences to remove the pigment. After that, the chlorine ion concentration was measured by the anion chromatography ("LC-10A" produced by Shimadzu Corporation).

### Evaluation of corrosion potential

(1) The ink was introduced into a beaker, followed by being immersed in a constant temperature water bath. The temperature of the constant temperature water bath was set to 60 °C, followed by being left to stand for 30 to 60 minutes so that the temperature of the ink was 60 °C.
(2) An alloy of iron and nickel, which was used as a working electrode metal piece, was immersed in an alkaline washing solution (ACECLEAN 850 produced by Okuno Chemical Industries Co., Ltd.), followed by being left to stand at 60 °C for 5 minutes and then being washed with pure water.
(3) The working electrode metal piece and a platinum plate as a counter electrode thereof were immersed in the ink, and the electrodes were connected to one another outside the ink to measure the current density in an electric potential range of -600 to +400 mV.

The obtained electric potentials were evaluated into four grades of "++", "+", "±", and "-" in accordance with the following criteria. It is noted that the following fact has been revealed according to a preparatory experiment performed by the inventors. When the voltage range is -600 to +400 mV at less than 100 µA/cm², then the metal material in the ink-jet head is not corroded, no clog-up occurs at the filter and the nozzle, and the highly accurate discharge and landing control can be sufficiently performed upon the actual use of the ink. In particular, in the case of less than 10 µA/cm², the highly accurate discharge and landing control can be performed with no problem at all, even when a high temperature severe condition, under which the metal corrosion tends to occur, is continued for a long term. On the other hand, in the case of not less than 100 µA/cm², any influence, which includes, for example, the production of foreign matters and the deformation of the flow passage due to the metal corrosion, is expressed, the discharge is disturbed, and it is impossible to perform the highly accurate discharge and landing control, when the continuous discharge is performed for a long term. In particular, in the case of not less than 200 µA/cm², the discharge itself is hardly performed, for example, such that the nozzle is completely clogged, because the influence of the metal corrosion is extremely increased.

### Evaluation criteria for corrosion potential

++: less than 10 µA/cm²;
+: not less than 10 µA/cm² and less than 100 µA/cm²;
±: not less than 100 µA/cm² and less than 200 µA/cm²;
-: not less than 200 µA/cm².

Obtained results are shown in Table 1. With reference to Table 1, according to Examples 1 to 3 of the present invention, the satisfactory results are obtained in the evaluation of the corrosion potential, because the content of the chlorine ion is not more than 8 ppm (not more than 2 ppm in Examples 1 and 2). Therefore, even when the inks of Examples of the present invention are used for the ink-jet recording apparatus which has the metal member composed of iron, nickel, or an alloy containing both of them at the discharge section or in the ink supply passage to the discharge section, then the metal member is not corroded, the filter and the nozzle are not clogged, and it is possible to perform the sufficiently highly accurate discharge and landing control.

In the inks of Examples of the present invention, 1,2,3-benzotriazole is used as the rustproofing agent. Accordingly, the corrosion of the metal member is further suppressed.

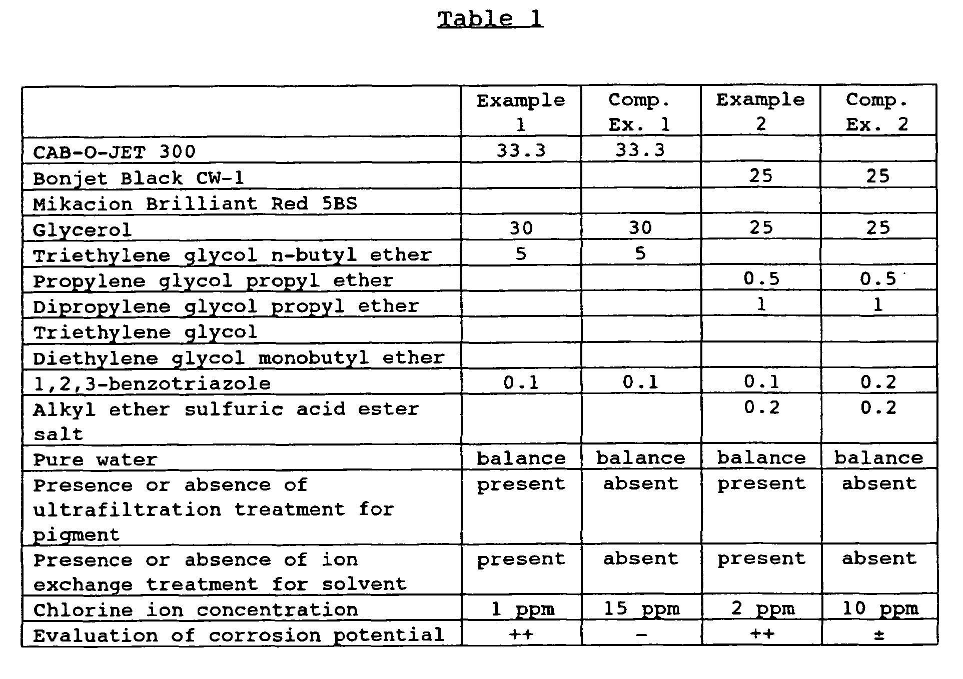

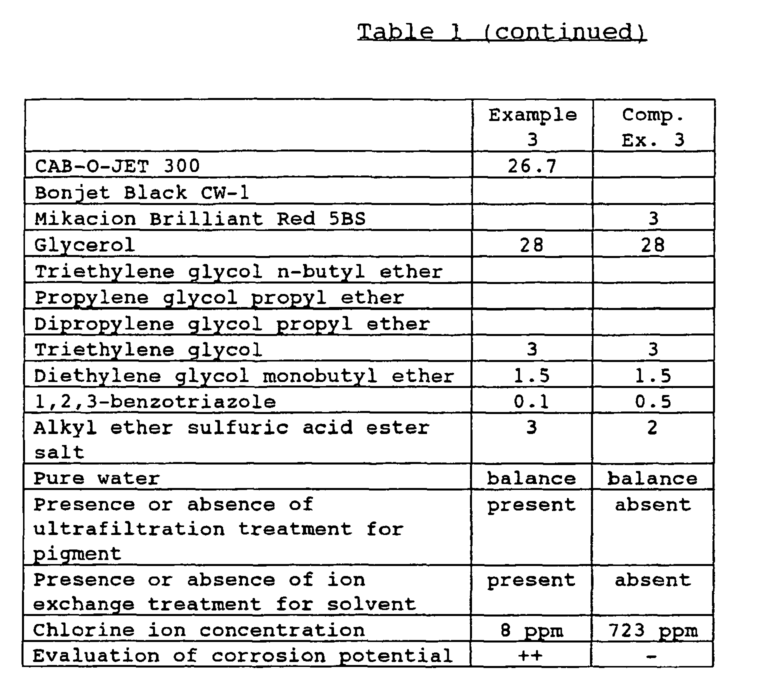

The ink prepared by the method of the present invention does not corrode the metal in the ink-jet head, especially the nickel, iron, nickel alloy or iron alloy. It is possible to provide the ink-jet recording apparatus which makes it possible to obtain the stable discharge performance.

An ink jet printer as an ink-jet recording apparatus will be described as below with reference to the accompanying drawings.

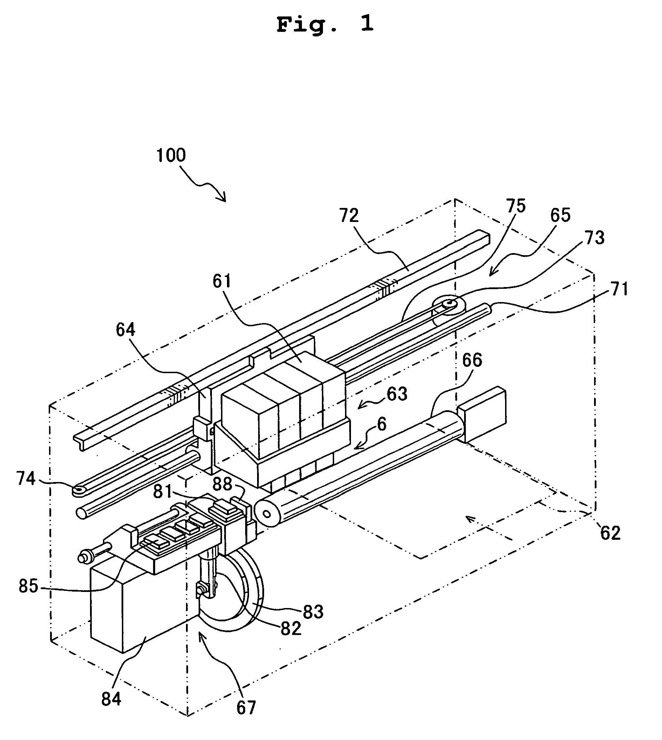

As shown in FIG. 1, a color ink jet printer 100 includes four ink cartridges (ink tank) 61, each of which contains a respective color of ink, such as cyan, magenta, yellow and black ink, a head unit 63 having an ink jet printer head 6 (hereinafter referred to as a head 6) for ejecting ink onto a sheet 62, a carriage 64 on which the ink cartridges 61 and the head unit 63 are mounted, a drive unit 65 that reciprocates the carriage 64 in a straight line, a platen roller 66 that extends in a reciprocating direction of the carriage 64 and is disposed opposite to the head 6, and a purge unit 67. As the black, cyan, magenta and yellow ink, the ink prepared in the above examples can be used.

The drive unit 65 includes a carriage shaft 71, a guide plate 72, two pulleys 73 and 74, and an endless belt 75. The carriage shaft 71 is disposed at a lower end portion of the carriage 64 and extends in parallel with the platen roller 66. The guide plate 72 is disposed at an upper end portion of the carriage 64 and extends in parallel with the carriage shaft 71. The pulleys 73 and 74 are disposed at both end portions of the carriage shaft 71 and between the carriage shaft 71 and the guide plate 72. The endless belt 75 is stretched between the pulleys 73 and 74.

As the pulley 73 is rotated in normal and reverse directions by a motor, the carriage 64, connected to the endless belt 75, is reciprocated in the straight direction, along the carriage shaft 71 and the guide plate 72, in accordance with the normal and reverse rotation of the pulley 73.

The sheet 62 is supplied from a sheet cassette (not shown) provided in the ink jet printer 100 and fed between the head 6 and the platen roller 66 to perform predetermined printing by ink droplets ejected from the head 6. Then, the sheet 62 is discharged to the outside. A sheet feeding mechanism and a sheet discharging mechanism are omitted from FIG. 1.

The purge unit 67 is provided on a side of the platen roller 66. The purge unit 67 is disposed to be opposed to the head 6 when the head unit 63 is located in a reset position. The purge unit 67 includes a purge cap 81, a pump 82, a cam 83, and a waste ink reservoir 84. The purge cap 81 contacts a nozzle surface to cover a plurality of nozzles (described later) formed in the head 6. When the head unit 63 is placed in the reset position, the nozzles in the head 6 are covered with the purge cap 81 to inhale ink including air bubbles trapped in the head 6 by the pump 82 and by the cam 83, thereby purging the head 6. The inhaled ink is stored in the waste ink reservoir 84.

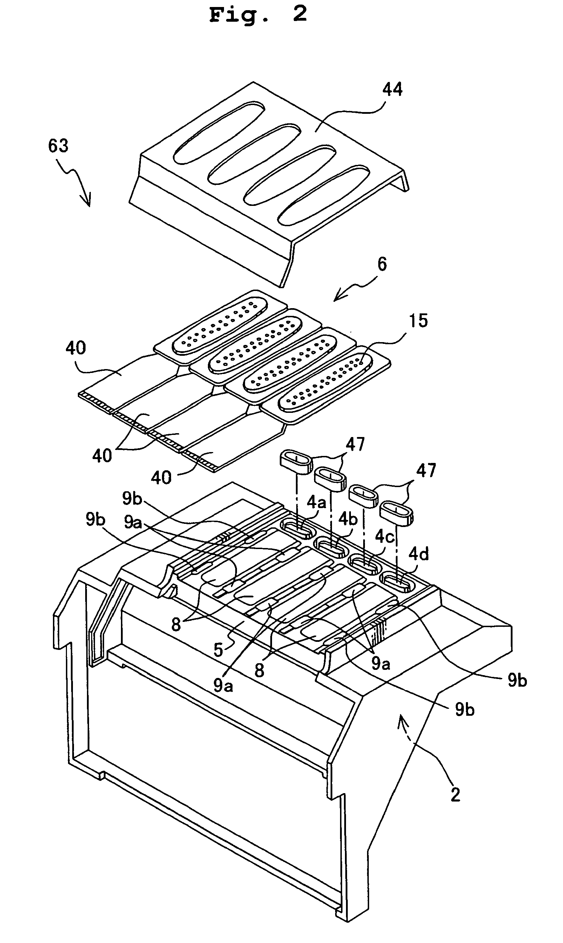

To prevent ink from drying, a cap 85 is provided to cover the nozzles 15 (FIG. 2) in the head 6 mounted on the carriage 64 when it returns to the reset position after printing. The ink jet printer 100 is further provided with a wiper 88 adjacent to the purge cap 81. The wiper 88 wipes the nozzle surface to remove the ink on the surface.

As shown in FIG. 2, the head unit 63 is mounted on the carriage 64 that moves along the sheet 62 and has a substantially box shape with upper open structure. The head unit 63 has a cover plate 44 made of an elastic thin metallic plate. The cover plate 44 is fixed at the front surface of the head unit 63 and covers the head unit 63 when the head 6 is removed. The head unit 63 also has a mounting portion 2 on which the four ink cartridges 61 are detachably attached from above. Ink supply paths 4a, 4b, 4c, 4d, each of which connects respective ink discharge portions of each ink cartridge 61, communicate with a bottom of a bottom plate 5 of the head unit 63. Each of the ink supply paths 4a, 4b, 4c, 4d is provided with a rubber packing 47 to intimately contact an ink supply hole 19a.

The head 6 is constructed from four blocks that are arranged in parallel to each other. On the underside of the bottom plate 5, four stepped supports 8 are formed to receive the respective blocks of the head 6. In the bottom plate 5, a plurality of recesses 9a, 9b, which are filled with an UV adhesive to bond the respective blocks of the head 6, are formed to penetrate the bottom plate 5.

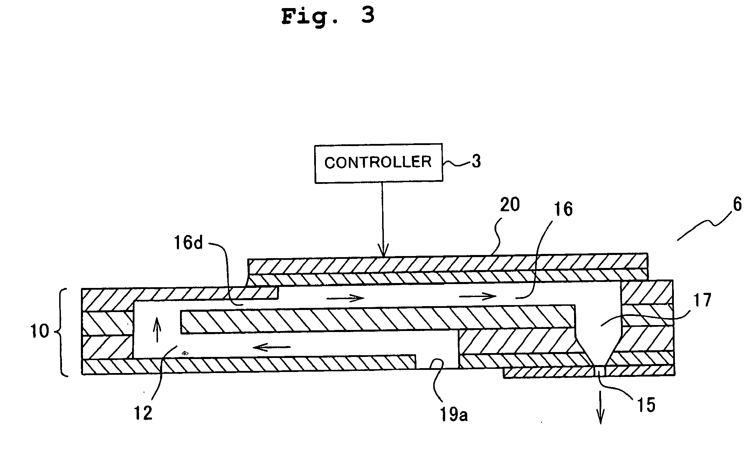

FIG. 3 is a sectional view showing one of the pressure chambers in the head 6. A plurality of pressure chambers 16 are provided in the head 6. The nozzles 15 communicating the respective pressure chambers 16 are provided substantially in line in one surface of the head 6.

As shown in FIG. 3, the head 6 is constructed by the cavity plate 10 comprised of a plurality of thin metal plates which are formed of nickel, iron, nickel alloy or iron alloy and the piezoelectric actuator 20. The cavity plate 10 has the ink supply holes 19a connected with the ink cartridge 61, the manifolds 12, the narrowed portions 16d, the pressure chambers 16, the through holes 17 and the nozzles 15, which communicate with each other. While the ink supply hole 19a opens toward the ejecting direction of the nozzle 15 in FIG. 3 for convenience, the ink supply hole 19a actually opens toward the piezoelectric actuator 20. A controller 3 provides a prestored driving pulse to the piezoelectric actuator 20 by superimposing the driving pulse on a clock signal.

The ink prepared by the method of the present invention is useful as the pigment ink to be used for the printer for ink-jet recording. In particular, the ink prepared by the method of the present invention suppresses the corrosion of the metal member. Therefore, the ink prepared by the method of the present invention is useful as the ink to be used for the printer for ink-jet recording which has the metal member such as iron and nickel at the discharge section or in the ink supply passage to the discharge section.

## Claims

1. A method of preparing a water base ink for ink jet recording comprising water and carbon black as a coloring agent, wherein the content of chlorine ion in the ink is not more than 8 ppm, wherein said method comprises removing chlorine or chlorine ion from carbon black by ultrafiltration, and mixing the carbon black with water.

2. An method according to claim 1, wherein the content of chlorine ion in the ink is not more than 2 ppm.

3. An method according to claim 1 or 2, wherein a triazole-based compound is added to the ink..

4. An method according to claim 3, wherein the triazole-based compound comprises 1,2,3-benzotriazole.

5. An method according to any preceding claim, wherein the dissolved oxygen content is not more than 9 ppm.

## Patentansprüche

1. Verfahren des Darstellens einer Tinte auf Wasserbasis für Tintenstrahlaufzeichnen mit Wasser und Farbruß als Färbemittel,
worin der Gehalt von Chlorion in der Tinte nicht mehr als 8 ppm beträgt,
worin das Verfahren aufweist
Entfernen von Chlor oder Chlorion von Farbruß durch Ultrafiltration und
Mischen des Farbruß mit Wasser.

2. Verfahren nach Anspruch 1, bei dem der Gehalt von Chlorion in der Tinte nicht mehr als 2 ppm beträgt.

3. Verfahren nach Anspruch 1 oder 2, bei dem eine Verbindung auf Triazolbasis zu der Tinte hinzugefügt wird.

4. Verfahren nach Anspruch 3, bei dem die Verbindung auf Triazolbasis 1,2,3-Benzotriazol aufweist.

5. Verfahren nach einem der vorhergehenden Ansprüche, bei dem der gelöste Sauerstoffgehalt nicht mehr als 9 ppm beträgt.

## Revendications

1. Procédé de préparation d'une encre à base aqueuse pour impression à jet d'encre comprenant de l'eau et du noir de carbone comme agent colorant, dans lequel la teneur en ions de chlore dans l'encre n'est pas supérieure à 8 ppm, dans lequel ledit procédé comprend l'élimination du chlore ou des ions de chlore du noir de carbone par ultrafiltration, et le mélange du noir de carbone avec de l'eau.

2. Procédé selon la revendication 1, dans lequel la teneur en ions de chlore dans l'encre n'est pas supérieure à 2 ppm.

3. Procédé selon la revendication 1 ou 2, dans lequel un composé à base de triazole est ajouté à l'encre.

4. Procédé selon la revendication 3, dans lequel le composé à base de triazole comprend le 1,2,3-benzotriazole.

5. Procédé selon l'une quelconque des revendications précédentes, dans lequel la teneur en oxygène dissous n'est pas supérieure à 9 ppm.
